# EUROPÄISCHE PATENTSCHRIFT

(11) **EP 1 053 454 B1**
(45) Veröffentlichungstag und Bekanntmachung des Hinweises auf die Patenterteilung: **23.09.2009**
(21) Anmeldenummer: 99907292.9
(22) Anmeldetag: 28.01.1999
(51) Int. Cl.: G01J 3/04, G02B 5/00, G02B 21/00

(54) **OPTISCHE ANORDNUNG ZUM SPEKTRALEN AUFFÄCHERN EINES LICHTSTRAHLS**
OPTICAL ARRANGEMENT PROVIDED FOR A SPECTRAL FANNING OUT OF A LIGHT BEAM
DISPOSITIF OPTIQUE POUR LA DISPERSION SPECTRALE D'UN FAISCEAU LUMINEUX

(30) Priorität: 29.01.1998 DE 19803442
(43) Veröffentlichungstag der Anmeldung: 22.11.2000
(73) Patentinhaber: Leica Microsystems CMS GmbH, 35578 Wetzlar (DE)
(72) Erfinder: ENGELHARDT, Johann, D-76669 Bad Schönborn (DE); ULRICH, Heinrich, D-69121 Heidelberg (DE); GUGEL, Hilmar, D-69221 Dossenheim (DE)
(74) Vertreter: Reichert, Werner Franz
(86) Internationale Anmeldenummer: PCT/DE1999/000211
(87) Internationale Veröffentlichungsnummer: WO 1999/039165

(56) Entgegenhaltungen:
- EP-A- 0 565 069
- US-A- 5 532 873
- US-A- 5 537 247
- US-A- 5 600 620

## Beschreibung

Die Erfindung betrifft eine optische Anordnung zum spektralen Auffächern eines Lichtstrahls, vorzugsweise im Detektionsstrahlengang eines Konfokalmikroskops, insbesondere zum anschließenden Aufspalten des aufgefächerten Strahls aus dessen Dispersionsebene heraus und zur Detektion der aufgespaltenen Spektralbereiche, wobei der ankommende Lichtstrahl auf ein Pinhole fokussiert ist.

Optische Anordnungen der hier in Rede stehenden Art sind aus der Praxis seit geraumer Zeit bekannt, und zwar in Verbindung mit der gleichzeitigen Detektion mehrerer Spektralbereiche eines Lichtstrahls, die mit einem sogenannten Multibanddetektor erfolgt. Bei einem solchen Multibanddetektor handelt es sich um eine aufwendige optische Anordnung, die bislang mit zusätzlicher Optik eine Mehrfachfokussierung ermöglicht.

Die US 5,537,247 offenbart eine optische Anordnung zum spektralen Auffächern eines Lichtstahls. Dieser Lichtstrahl wird auf ein Pinhole fokussiert, welches einen polygonförmigen Durchtritt haben kann. Der vom Objekt reflektierte Lichtstrahl wird dabei nach dem Passieren des Pinholes über Spiegel und Filter spektral aufgefächert.

Will man im Detektionsstrahlengang eines Konfokalmikroskops den Strahl zunächst spektral auffächern und anschließend aus dessen Dispersionsebene heraus in einzelne Spektralbereiche aufspalten, ist eine hohe Dynamik bei der Abtrennung des Anregungslichts erwünscht. Beugungserscheinungen, die durch die Form des Detektionspinholes hervorgefufen werden, stehen einer solchen hohen Dynamik jedoch grundsätzlich entgegen, wobei insbesondere die Nebenmaxima der Beugungsfunktion im spektral abgetrennten Detektionsbereich Probleme verursachen.

Der vorliegenden Erfindung liegt daher die Aufgabe zugrunde, eine optische Anordnung der gattungsbildenden Art derart auszugestalten und weiterzubilden, daß eine Aufspaltung des aufgefächerten Strahls mit einer Unterdrückung von störenden Beugungsanteilen im Spektralbereich möglich ist.

Die erfindungsgemäße optische Anordnung der gattungsgemäßen Art löst die voranstehende Aufgabe durch die Merkmale des Patentanspruches 1. Danach ist eine solche Anordnung **dadurch gekennzeichnet, daß** das Pinhole einen polygonförmigen Durchtritt für den Lichtstrahl hat.

Erfindungsgemäß ist zunächst einmal erkannt worden, daß die Form des Pinholes verantwortlich dafür ist, welches Beugungsmuster für die verschiedenen Farben in der Fokusebene bzw. in der Dispersionsebene auftritt. Während nämlich ein Pinhole mit rundem Durchtritt kreisringförmige Beugungsnebenmaxima mit limitierter Dynamik aufgrund der hier auftretenden Beugungseffekte aufweist, ergibt sich aus der Anwendung eines Pinholes mit polygonförmigem Durchtritt ein ganz anderes Beugungsmuster, nämlich ein Beugungsmuster; dessen Beugungsmaxima in sich überkreuzenden Linien angeordnet sind. Jedenfalls ist es angesichts einer solchen Anordnung möglich, die Hauptbeugungsmaxima zu detektieren, und die problematischen Nebengeugungserscheinungen zu unterdrücken.

Hinsichtlich einer konkreten Ausgestaltung des Pinholes bzw. des dort ausgebildeten Durchtritts ist es von weiterem Vorteil, wenn dieser - polygonförmige - Durchtritt symmetrisch ausgestaltet ist. Dabei könnte der Durchtritt dreieckig oder viereckig ausgebildet sein, wobei im Rahmen einer viereckigen Ausgestaltung die symmetrische und dabei rechteckige Form von besonderem Vorteil ist. Daraus ergibt sich nämlich ein ganz besonders geeignetes Beugungsmuster des Pinholes für verschiedene Spektralbereiche bzw. Farben, nämlich ein Spektralkreuz, wobei sich die Achsen des Kreuzes in den Hauptbeugungsmaxima treffen. Dazwischenliegende Nebenbeugungsmaxima sind bei der Detektion bzw. Aufspaltung weniger problematisch.

Im Strahlengang vor und/oder nach dem Pinhole könnten zusätzlich Blenden angeordnet sein, wobei es sich dabei vorzugsweise um variable Blenden handelt. Diese Blenden dienen zur Unterdrückung von Beugungsmaxima bzw. Beugungserscheinungen höherer Ordnung.

Grundsätzlich ist die gleichzeitige Detektion mehrerer Spektralbereiche eines Lichtstrahls dann ohne weiteres möglich, wenn man den Lichtstrahl zunächst spektral auffächert und anschließend aus der Dispersionsebene heraus eine Aufspaltung des aufgefächerten Strahls vornimmt. Die Aufspaltung des aufgefächerten Strahls aus der Dispersionsebene heraus erfolgt mittels einer besonderen optischen Anordnung, wobei die in Spektralbereiche aufgespaltenen Teilstrahlen bzw. die Spektralbereiche selbst detektiert werden, und zwar gleichzeitig. Wesentlich ist hier, daß der eigentlichen Aufspaltung in Spektralbereiche ein Auffächern des Lichtstrahls vorangeht, so daß die Aufspaltung aus der Dispersionsebene heraus am aufgefächerten Strahl stattfinden kann. Eine Mehrfachfokussierung mit zusätzlicher Optik ist hier jedenfalls nicht erforderlich.

Grundsätzlich sind hier zwei optische Anordnungen vorgesehen, nämlich einmal zum spektralen Auffächern des Lichtstrahls und ein anderes Mal zum Aufspalten und anschließenden Detektieren. Der Anordnung zum spektralen Auffächern des Lichtstrahls ist das Pinhole vorgeschaltet, auf das der ankommende Lichtstrahl fokussiert ist, wobei das Pinhole einem Laserscanner unmittelbar nachgeschaltet sein kann. Wesentlich ist hier jedenfalls die Erkenntnis, daß die Form des Durchtritts im Pinhole ein bestimmtes Beugungsmuster des aufgefächerten Lichtstrahls in der Dispersionsebene erzeugt.

Vom Pinhole läuft der Strahl ggf. über die bereits zuvor erwähnte variable Blende zu Fokussieroptiken und Dispersionsmitteln. Die Dispersionsmittel können im Hinblick auf eine besonders einfache Konstruktion als Prisma ausgeführt sein. Vor und nach den Dispersionsmitteln bzw. dem Prisma ist jeweils eine Fokussieroptik angeordnet, die wiederum eine Linsenanordnung umfassen kann.

Der von dem Pinhole zum Prisma laufende divergente Strahl wird durch die Fokussieroptiken in die nachgeordnete Spalt-/Detektoranordnung fokussiert, von wo aus die Aufspaltung in Spektralbereiche stattfindet.

Hinsichtlich der Spalt-/Detektoranordnung ist es von Vorteil, wenn dort in der Fokusebene bzw. Dispersionsebene des aufgefächerten Strahls besondere Farbselektionsspalten vorgesehen sind, die wiederum derart angeordnet und ausgerichtet sind, daß Beugungserscheinungen am Detektionsspalt ausblendbar sind.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung werden auch im allgemeinen bevorzugte Ausgestaltungen und Weiterbildungen der Lehre erläutert. In der Zeichnung zeigt
- Fig. 1: in einer schematischen Darstellung eine herkömmliche optische Anordnung mit einem einen runden Durchtritt aufweisenden Pinhole,
- Fig. 2: in einer schematischen Darstellung ein Ausführungsbeispiel einer erfindungsgemäßen optischen Anordnung, wobei das Pinhole einen quadratischen Durchtritt aufweist und
- Fig. 3: in einer schematischen Darstellung die gesamte optische Anordnung umfassend das Auffächern des Lichtstrahls, die Aufspaltung des aufgefächerten Strahls und die Detektion.

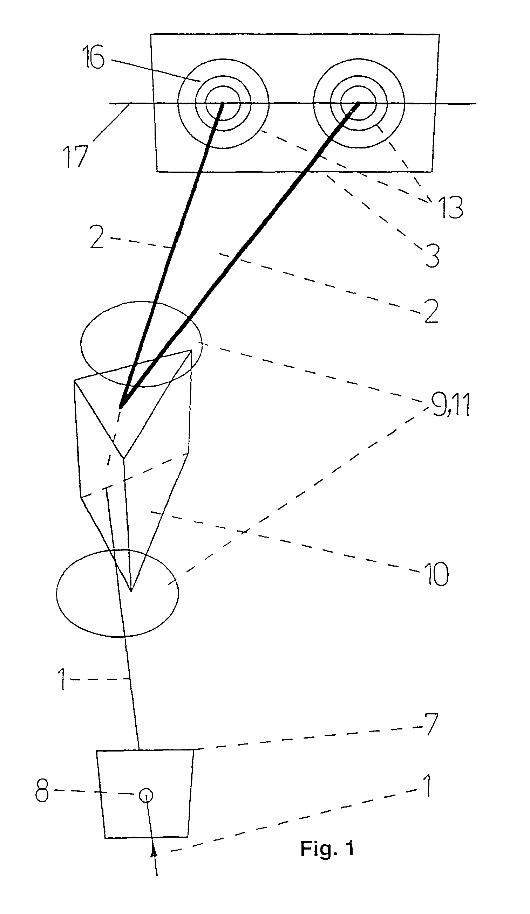

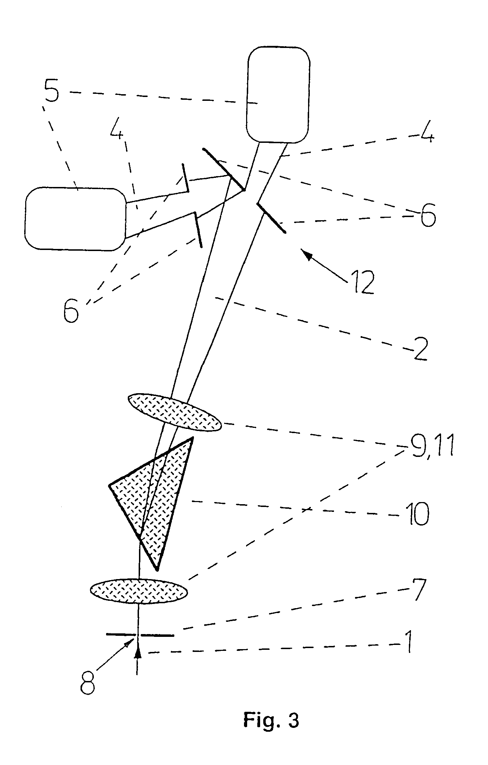

Die Fig. 1 bis 3 zeigen eine optische Anordnung zum spektralen Auffächern eines Lichtstrahls 1, wobei es sich hier um den Lichtstrahl 1 im Detektionsstrahlengang eines in den Figuren nicht gezeigten Konfokalmikroskops handelt. Nach dem spektralen Auffächern des Lichtstrahls 1 findet eine Aufspaltung des aufgefächerten Strahls 2 aus dessen Dispersionsebene 3 heraus statt. Es erfolgt eine Detektion der aufgespaltenen Spektralbereiche 4 mittels geeigneter Detektoren 5. Der Gesamtzusammenhang läßt sich Fig. 3 entnehmen, wobei dort zur Aufspaltung des aufgefächerten Strahls 2 Detektionsspalte 6 zur Selektion der Spektralbereiche 4 vorgesehen sind. Die hier gewählte einfache Darstellung dient der Verdeutlichung der Funktionsweise. Auf die Darstellung weiterer Einzelheiten wird der Übersicht halber verzichtet.

Bei der in Fig. 1 gezeigten optischen Anordnung handelt es sich um eine Anordnung herkömmlicher Art, d.h. um eine aus dem Stand der Technik bekannte Anordnung, bei der der ankommende Lichtstrahl 1 auf ein Pinhole 7 mit rundem Durchtritt 8 fokussiert ist. Von dort aus verläuft der Strahl durch eine Fokussieroptik 9, und ein als Prisma 10 ausgeführtes Dispersionsmittel über eine weitere Fokussieroptik 11 in eine lediglich in Fig. 3 angedeutete Spalt-/Detektoranordnung 12, wobei sich aufgrund des Pinholes 7 mit rundem Durchtritt 8 in der Dispersionsebene 3 ein ganz besonderes Beugungsmuster 13 für verschiedene Farben ergibt. Kreisringförmig abgebildete Beugungsnebenmaxima limitieren die Dynamik des bekannten Systems.

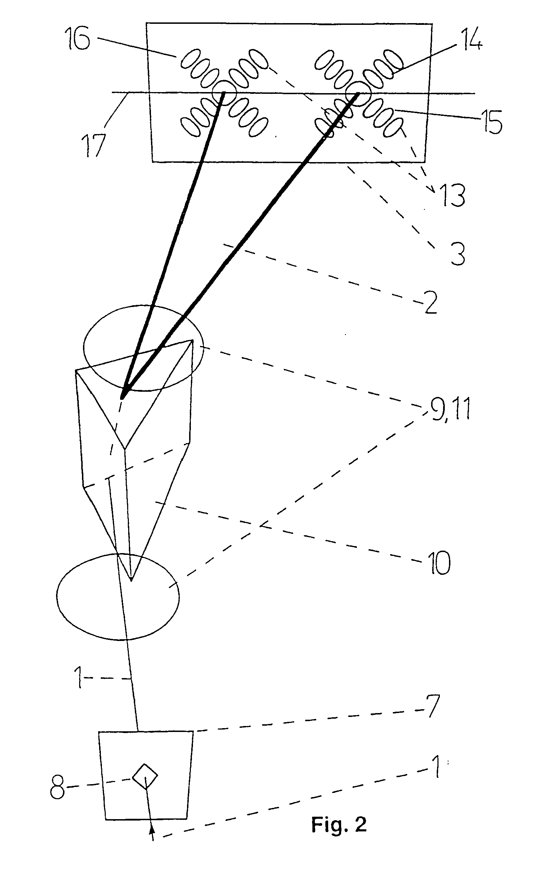

Fig. 2 zeigt eine erfindungsgemäße optische Anordnung, bei der das Pinhole 7 einen polygonförmigen Durchtritt 8 aufweist, nämlich im Konkreten einen viereckigen bzw. rechteckigen Durchtritt. Dieses Pinhole 7 bzw. der dort realisierte Durchtritt 8 verursacht im Gegensatz zu der herkömmlichen optischen Anordnung ein ganz anderes Beugungsmuster 13 in der Dispersionsebene 3, nämlich aufgrund der in zwei Linien 14, 15 angeordneten Beugungsmaxima 16.

Fig. 2 zeigt lediglich symbolisch, daß die Detektionsspalte 6 derart angeordnet und ausgerichtet sind, daß Beugungserscheinungen am Detektionspalt 6 ausblendbar sind, da nämlich entlang der Detektionslinie 17 allenfalls vernachlässigbare Nebenbeugungsmaxima liegen.

Wesentlich ist jedenfalls, daß die Ausgestaltung des Pinholes bzw. dessen Durchtritts 8 für das Beugungsmuster 13 verantwortlich ist, wobei bei polygonförmigem Durchtritt 8 das Pinhole 7 ein Beugungsmuster 13 ergibt, welches eine Ausblendung der Nebenmaxima der Beugungserscheinung durch geeignete Detektionsspalte 6 ermöglicht, so nämlich bei Verwendung eines rechteckigen Durchtritts 8 des Pinholes 7 durch spektrale Aufspaltung diagonal zum Beugungskreuz.

### Bezugszeichenliste

- 1: Lichtstrahl
- 2: aufgefächerter Strahl
- 3: Dispersionsebene
- 4: Spektralbereich
- 5: Detektor
- 6: Detektionsspalte
- 7: Pinhole
- 8: Durchtritt
- 9: Fokussieroptik
- 10: Prisma
- 11: Fokussieroptik
- 12: Spalt-/Detektoranordnung
- 13: Beugungsmuster
- 14: Linie
- 15: Linie
- 16: Beugungsmaxima
- 17: Detektionslinie

## Patentansprüche

1. Optische Anordnung zur spektralen Detektion eines Lichtstrahls (1), im Detektionsstrahlengang eines Konfokalmikroskops, wobei der ankommende Lichtstrahl (1) im Detektionsstrahlengang auf ein Pinhole (7) fokussiert ist,
**dadurch gekennzeichnet, dass** in Strahlrichtung nach dem Pinhole (7) ein Dispersionsmittel (10) vorgesehen ist, das einen in einer Dispersionsebene (3) spektral aufgefächerten Strahl (2) erzeugt, dass das Pinhole (7) einen polygonförmigen Durchtritt (8) hat, und dass ein durch das Pinhole (7) mit polygonförmigen Durchtritt (8) erzeugtes Beugungsmuster (13) derart ausgebildet ist, dass im Wesentlichen Hauptbeugungsmaxima des Beugungsmuster (13) auf einer Detektionslinie (17) liegen.

2. Anordnung nach Anspruch 1, **dadurch gekennzeichnet, dass** der polygonförmige Durchtritt (8) symmetrisch ausgestaltet ist.

3. Anordnung nach Anspruch 1 oder 2, **dadurch gekennzeichnet, dass** der Durchtritt (8) dreieckig ausgebildet ist.

4. Anordnung nach Anspruch 1 oder 2, **dadurch gekennzeichnet, dass** der Durchtritt (8) viereckig ausgebildet ist.

5. Anordnung nach Anspruch 4, **dadurch gekenntzeichnet, dass** der Durchtritt (8) rechteckig ausgebildet ist.

6. Anordnung nach einem der Ansprüche 1 bis 5, **dadurch gekennzeichnet, dass** im Strahlengang vor und/oder nach dem Pinhole (7) eine vorzugsweise variable Blende angeordnet ist.

7. Anordnung nach einem der Ansprüche 1 bis 6, **dadurch gekennzeichnet, dass** dem Dispersionsmittel im Strahlengang Fokussieroptiken (9, 11) nachgeordnet sind.

8. Anordnung nach Anspruch 7, **dadurch gekennzeichnet, dass** die Dispersionsmittel ein Prisma (10) umfassen.

9. Anordnung nach Anspruch 7, **dadurch gekennzeichnet, dass** die Fokussieroptiken (9, 11) Linsenanordnungen umfassen.

10. Anordnung nach Anspruch 9, **dadurch gekennzeichnet, dass** der Lichtstrahl (1) mittels der Fokussieroptiken (9, 11) in eine Spalt-/Detektoranordnung (12) fokussierbar ist.

11. AnordnungnachAnspruch10, **dadurch gekennzeichnet, dass** die Spalt-/Detektoranordnung (12) in der Fokusebene bzw. Dispersionsebene (3) des aufgefächerten Strahls (2) Farbselektionsspalte bzw. Detektionsspalte (6) umfasst, die derart angeordnet und ausgerichtet sind, dass Beugungserscheinungen am Detektionsspalt ausblendbar sind.

## Claims

1. An optical arrangement for spectrally detecting a light beam (1) in the detection beam path of a confocal microscope, the incoming light beam (1) being focused onto a pinhole (7) in the detection beam path,
**characterized in that** downstream of the pinhole (7) in beam direction dispersing means (10) are provided which generate a beam (2) spectrally spread out in a dispersion plane (3), **in that** the pinhole (7) has a polygon-shaped passage (8), and **in that** a diffraction pattern (13) created by the pinhole (7) having the polygon-shaped passage (8) is formed such that substantially main diffraction maxima of the diffraction pattern (13) lie on a detection line (17).

2. The arrangement according to claim 1, **characterized in that** the polygon-shaped passage (8) is symmetrically formed.

3. The arrangement according to claim 1 or 2, **characterized in that** the passage (8) is configured as a triangle.

4. The arrangement according to claim 1 or 2, **characterized in that** the passage (8) is configured as a square.

5. The arrangement according to claim 4, **characterized in that** the passage (8) is configured as a rectangle.

6. The arrangement according to one of the claims 1 to 5, **characterized in that** in the beam path upstream and/or downstream of the pinhole (7) a preferably variable diaphragm is arranged.

7. The arrangement according to one of the claims 1 to 6, **characterized in that** focusing optical system (9, 11) are arranged downstream of the dispersing means in the beam path.

8. The arrangement according to claim 7, **characterized in that** the dispersing means comprise a prism (10).

9. The arrangement according to claim 7, **characterized in that** the focusing optical systems (9, 11) comprise lens arrangements.

10. The arrangement according to claim 9, **characterized in that** the light beam (1) can be focused by means of the focusing optical systems (9, 11) into a slit/detector arrangement (12).

11. The arrangement according to claim 10, **characterized in that** the slit/detector arrangement (12) comprises in the focal plane or, respectively, dispersion plane (3) of the spread-out beam (2) colour selection slits or detection slits (6) which are arranged and oriented such that diffraction phenomena at the detection slit can be blocked out.

## Revendications

1. Dispositif optique pour la détection spectrale d'un rayon lumineux (1), dans le trajet du rayon à détecter d'un microscope à foyer commun, le rayon lumineux incident (1) étant focalisé sur un sténopé (7) dans le trajet du rayon à détecter,
**caractérisé en ce qu'**il est prévu en aval du sténopé (7), par référence au trajet du rayon, un moyen de dispersion (10) qui génère dans un plan de dispersion (3) un rayon étalé du point de vue spectral, **en ce que** le sténopé (7) possède un passage polygonal (8), et **en ce qu'**une figure de diffraction (13), générée par le sténopé (7) doté d'un passage polygonal (8), est conformée de telle sorte que les maxima de diffraction principaux de la figure de diffraction (13) se trouvent essentiellement sur une ligne de détection (17) .

2. Dispositif selon la revendication 1, **caractérisé en ce que** le passage polygonal (8) a une conformation symétrique.

3. Dispositif selon la revendication 1 ou 2, **caractérisé en ce que** le passage (8) a une conformation triangulaire.

4. Dispositif selon la revendication 1 ou 2, **caractérisé en ce que** le passage (8) a une conformation quadrangulaire.

5. Dispositif selon la revendication 4,
**caractérisé en ce que** le passage (8) a une conformation rectangulaire.

6. Dispositif selon l'une des revendications 1 à 5, **caractérisé en ce qu'**un diaphragme avantageusement variable est disposé dans le trajet du rayon, en amont et/ou en aval du sténopé (7).

7. Dispositif selon l'une des revendications 1 à 6, **caractérisé en ce que** des optiques de focalisation (9, 11) sont disposées dans le trajet du rayon en aval du moyen de dispersion.

8. Dispositif selon la revendication 7, **caractérisé en ce que** les moyens de dispersion comportent un prisme (10).

9. Dispositif selon la revendication 7, **caractérisé en ce que** les optiques de focalisation (9, 11) comportent des agencements de lentilles.

10. Dispositif selon la revendication 9, **caractérisé en ce que** le rayon lumineux (1) peut être focalisé dans un dispositif détecteur à fente (12) au moyen des optiques de focalisation (9, 11).

11. Dispositif selon la revendication 10, **caractérisé en ce que** le dispositif détecteur à fente (12) comporte, dans le plan de focalisation, en particulier le plan de dispersion (3), du rayon étalé (2), des fentes de sélection de couleurs, en particulier des fentes de détection (6), qui sont disposées et orientées de façon à diaphragmer des phénomènes de diffraction au niveau de la fente de détection.
